# EUROPÄISCHE PATENTANMELDUNG

(11) **EP 1 043 208 A1**
(43) Veröffentlichungstag der Anmeldung: **11.10.2000**
(21) Anmeldenummer: 00106789.1
(22) Anmeldetag: 30.03.2000
(51) Int. Cl.: B62B 5/00, B62B 3/10, A61G 12/00

(54) **Transportgerät für Frischwäsche, Schmutzwäsche und ggf. Pflegemittel für Krankenhäuser und Pflegeheime**

(30) Priorität: 03.04.1999 DE 29906085 U
(71) Anmelder: Hammerlit GmbH, D-26789 Leer/Ostfriesland (DE)
(72) Erfinder:

(57) **Zusammenfassung**

Die Erfindung betrifft ein Transportgerät für Frischwäsche, Schmutzwäsche und ggf. Pflegemittel für Krankenhäuser und Pflegeheime mit
- einem allein verfahrbaren Etagenwagen (1), insbesondere Schrankwagen für Frischwäsche und Pflegemittel,
- einem allein verfahrbaren Wäschesammler (12) für Schmutzwäsche und
- einer lösbaren Kupplungseinrichtung am Etagenwagen (1) und am Wäschesammler (12) zum Zusammenfügen und gemeinsamen Verfahren jeweils eines Etagenwagens (1) und eines Wäschesammlers (12). Erfindungsgemäß wird eine vereinfachte Kupplungsvorrichtung dadurch geschaffen, daß am unteren Bereich des Etagenwagens (1) wenigstens ein beabstandeter, waagerechter, U-förmiger Bügel (4) angeordnet ist, der eine waagerechte Stange (20, 18) am Wäschesammler (12) über- oder untergreift, wobei dieser Bügel (4) zum Zentrieren des Wäschesammlers (12) bezüglich des Etagenwagens (1) dient, indem die zum unteren Bereich des Etagenwagens (1) führenden Schenkel (5) des U-förmigen Bügels (4) zwischen senkrechte Rohre (15) des Wäschesammlers (12) eingreifen oder senkrechte Stützen (21) umgreifen und daß wenigstens ein klappbarer Haken (6) die waagerechte Stange (18, 20) über- oder untergreift.

## Beschreibung

Die Neuerung betrifft ein Transportgerät für Frischwäsche, Schmutzwäsche und ggf. Pflegemittel für Krankenhäuser und Pflegeheime, bestehend aus einem allein verfahrbaren Etagenwagen, insbesondere Schrankwagen für Frischwäsche und Pflegemittel, einem allein verfahrbaren Wäschesammler für Schmutzwäsche und einer lösbaren Kupplungseinrichtung am Etagenwagen und am Wäschesammler zum Zusammenfügen und gemeinsamen Verfahren jeweils eines Etagenwagens und eines Wäschesammlers.

Derartige Geräte werden Etagenwagen genannt und dienen einerseits zum hygienisch einwandfreien Einsammeln von Schmutzwäsche und andererseits zum Bereitstellen der Frischwäsche und bestehen aus einem auf Rollen verfahrbaren Rohrgestell mit zwei durch eine erhöhte Zwischenwand getrennten Bereichen, einem Bereich mit Ablageflächen für die Frischwäsche und einem anderen Bereich mit Vorrichtungen zum Aufnehmen von Schmutzwäsche. Auf diese Weise wird ein unmittelbarer Kontakt zwischen der Schmutzwäsche- und der Frischwäsche vermieden. Die Vorrichtung zum Aufnehmen der Schmutzwäsche besteht aus Sackhalteringen, in die sich Schmutzwäschesäcke einhängen lassen, indem sie mit ihrem oberen Rand um den Sackhaltering umgeschlagen und an diesem festgeklemmt werden.

Diese bekannten Geräte können bis zu vier Sackhalteringe aufweisen und im Frischwäschebereich als Schrank ausgebildet sein.

Diese bekannten Geräte sind stets als einheitlicher, verfahrbarer Wagen ausgebildet, so daß das Gerät als Ganzes sowohl in den Schmutzwäschebereich zum Abladen der mit Schmutzwäsche gefüllten Säcke als auch in den Frischwäschebereich zum Beladen mit Frischwäsche verfahren werden muß. Auch lassen sich die Arbeitsgänge: Abziehen und Entsorgen der Schmutzwäsche sowie Herantransportieren und Auflegen der Frischwäsche nicht voneinander trennen, was bei größeren Krankenhäusern und Pflegeheimen ggf. zu einem günstigeren Arbeitsablauf führen würde.

Auch ist ein kuppelbarer Etagenwagen bekannt, der aus einem Schrankteil und einem Wäschesammler, die miteinander kuppelbar sind, besteht. Zu diesem Zweck ist an dem als Schrankwagen ausgebildeten Etagenwagen im unteren Bereich der erhöhten Rückwand ein U-förmiger, nach oben ragender Bügel angeordnet, während am Wäschesammler ein waagerechter, vorstehender Bügel angeordnet ist, der sich über den nach oben ragenden Bügel am Etagenwagen hinüberheben und einhängen läßt.

Der Etagenwagen und der Wäschesammler lassen sich somit im zusammengekuppelten Zustand in der üblichen Weise auf den Fluren und in den Zimmern durch eine Person gemeinsam verfahren, um Schmutzwäsche zu sammeln und Frischwäsche zu verteilen. Wenn sämtliche Frischwäsche verteilt ist und der Wäschesammler mit Schmutzwäsche gefüllt ist, läßt sich die Einheit bis in den Bereich für Schmutzwäsche im Sammelgerät in den Schmutzwäschebereich fahren, ohne daß der Transportwagen für Frischwäsche in diesen hygienisch nicht einwandfreien Bereich gelangt.

Des weiteren ist es möglich, die Einheit gekuppelt zu benutzen, den Etagenwagen und en Wäschesammler jedoch getrennt abzustellen, z. B. den Wäschesammler in einer Schmutzwäschestation in den Etagenwagen auf dem Flur des Krankenhauses oder des Pflegeheimes.

Diese Einheit aus einem gekuppelten Etagenwagen und einem Wäschesammler hat sich bewährt, was die gemeinsame und getrennte Nutzung anbetrifft. Für die Kupplungsvorrichtung hat sich erwiesen, daß das Auskuppeln eines mit Schmutzwäsche gefüllten Wäschesammlers das Anheben des Wäschesammlers erfordert und daher mit vergrößerten Mühen des Personals verbunden ist.
Dementsprechend liegt der Neuerung das Problem zugrunde, die Kupplungsvorrichtung zu vereinfachen und das Anheben des Wäschesammlers beim Ein- und Auskuppeln zu vermeiden.

Ausgehend von dieser Problemstellung wird bei einem Transportgerät der eingangs erwähnten Art vorgeschlagen, daß Neuerungsgemäß am unteren Bereich des Etagenwagens wenigstens ein beabstandeter, waagerechter, U-förmiger Bügel angeordnet ist, der eine waagerechte Stange am Wäschesammler über- oder untergreift, wobei dieser Bügel zum Zentrieren des Wäschesammlers bezüglich des Etagenwagens dient, indem die zum unteren Bereich des Etagenwagens führenden Schenkel des U-förmigen Bügels zwischen senkrechten Rohren des Wäschesammlers eingreifen oder senkrechte Stützen umgreifen und daß wenigstens ein klappbarer Haken die waagerechte Stange über- oder untergreift.

Durch die Ausbildung des bzw. der U-förmigen Bügel als Zentriervorrichtung des Wäschesammlers bezüglich des Etagenwagens wird das Kuppeln erheblich erleichtert, da es nicht erforderlich ist, den Etagenwagen und den Wäschesammler lagegenau gegeneinander zu fahren. Der weiteren braucht der Wäschesammler nicht mehr angehoben zu werden, um mit dem Etagenwagen gekuppelt zu werden, da der kuppelbare Haken zum Kuppeln dient, der sich fuß- oder handbetätigt in die Auskuppelstellung bewegen läßt und sich beispielsweise mittels Federkraft von selbst in die Einkupplungsstellung bewegt.
Vorzugsweise kann der U-förmige Bügel als Trapez ausgebildet sein, wobei die Schenkel zum Bereich des Etagenwagens hin auseinander laufen.

Wenn zwei U-fömige Bügel beabstandet zueinander am unteren Bereich des Etagenwagens angeordnet sind und die zum Kuppeln dienende waagerechte Stange am Wäschesammler gegenüber den senkrechten Rohren vorsteht, lassen sich an der waagerechten Stange zwei senkrechte Stützen für Laufrollen anordnen, deren Abstand so bemessen ist. daß sie mit geringem Spiel zwischen die Schenkel der U-förmigen Bügel greifen und die automatische Zentrierung bewirken.

Vorzugsweise kann der oder können die Haken an einer Schwenkachse unterhalb des Etagenwagens gelagert sein, wobei die Schwenkachse mit wenigstens einem seitlichen Betätigungshebel verbunden ist und eine die Haken in eine Einhakstellung bringende Feder vorgesehen ist. Dabei kann der oder können die Haken eine Anlaufschräge zum Über- oder Unterlaufen des waagerechten Rohres beim Einkuppeln aufweisen, sodaß das Einkuppeln automatisch beim Zusammenschieben des Wäschesammlers und des Etagenwagens erfolgt.

Die Neuerung wird nachstehend anhand eines in der Zeichnung gezeigten Ausführungsbeispiels des näheren erläutert. In der Zeichnung zeigen:
- Fig. 1: ein Neuerungsgemäßes Transportgerät aus einem Etagenwagen und einem Wäschesammler für Schmutzwäsche mit einer Neuerungsgemäßen Kupplungseinrichtung in perspektivischer Ansicht und
- Fig. 2: eine perspektivische Detailansicht einer Kupplungseinrichtung an einem Etagenwagen.

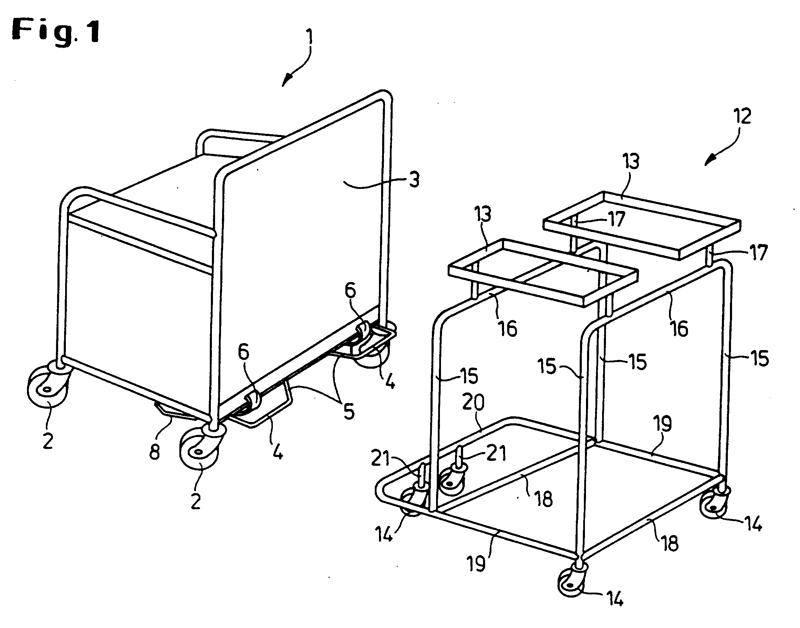

Das in Fig. 1 dargestellte Transportgerät besteht aus einem Etagenwagen 1, der als Schrankwagen ausgebildet ist. Der Schrankwagen besteht aus einem Rohrgestell und weist eine erhöhte, glatte Rückwand 3 auf Der Etagenwagen 1 läßt sich mittels an der Unterseite angeordneter Fahrrollen 2 leicht verfahren.

An der Unterkante der Rückwand 3 sind zwei waagerechte, U-förmige Bügel 4 angeordnet, von denen zumindest die benachbarten, zur Rückwand 3 führenden Schenkel 5 schräg verlaufen, so daß die Bügel 4 eine Trapezform aufweisen.

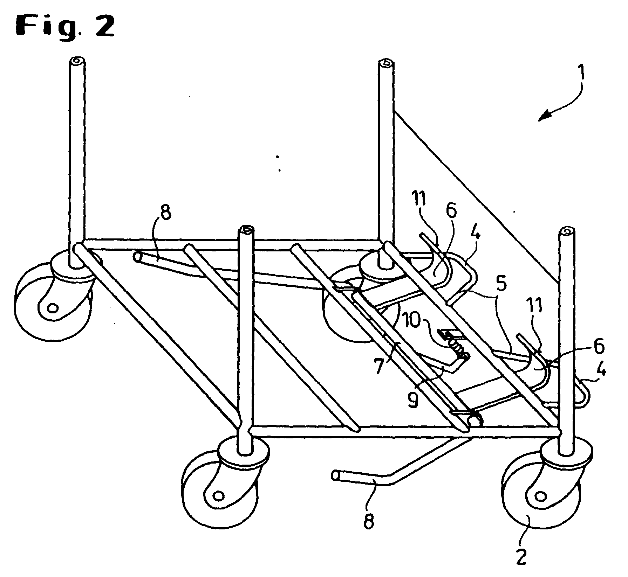

An der Unterseite des Etagenwagens 1 ist eine Schwenkachse 7 gelagert, an der zwei, in den freien Bereich der Bügel 4 hineinragende Haken 6 befestigt sind. An wenigstens einer Seite der Schwenkachse 7 ist ein seitlich am Etagenwagen 1 herausragender Betätigungshebel 8 angeordnet. Mittig an der Schwenkachse 7 ist ein Arm 98 befestigt, der mit einer Zugfeder 10 zusammenwirkt, die die Haken 6 in die in Figur 1 und 2 dargestellte, hochgeschwenkte Stellung zieht. Die Haken 6 sind so geformt, daß sich Anlaufschrägen 11 ergeben.

Mit dem Etagenwagen 1 läßt sich ein Wäschesammler 12 für Schmutzwäsche kuppeln. Der Wäschesammler 12 besteht aus einem Rohrgestell mit senkrechten Pfosten 15. Im unteren Bereich sind die Pfosten 15 durch untere Längsstreben 19 und Querstreben 18 verbunden.

Die oberen Enden der Pfosten 15 sind durch obere Querstreben 16 miteinander verbunden, auf denen Stützrohre 17 für Sackhalteringe 13 angeordnet sind. Säcke zum Aufnehmen der Schmutzwäsche werden in die Sackhalteringe 13 eingehängt, mit ihrem Rand um die Sackhalteringe 13 umgeschlagen und eingeklemmt. Die mit dem Etagenwagen zu kuppelnden Wäschesammler können einen Sackhaltering, zwei Sackhalteringe, wie dargestellt, oder vier im Quadrat angeordnete Sackhalteringe aufweisen. Von den unteren Längsstreben 19 geht ein U-förmiges Rohr 20 aus, das eine waagerechte Stange zum Kuppeln mit den Haken 6 bildet. Zwei Laufrollen 14 sind an Verlängerungen der senkrechten Pfosten 15 angeordnet, während zwei weitere Laufrollen 14 an vom Rohr 20 nach unten ragenden Stützen 21 angeordnet sind.

Das Rohr 20 ist so hoch am Wäschesammler 12 angeordnet, daß es sich über die U-Förmigen Bügel 4 am Etagenwagen 1 schieben läßt.

Die Stützen 21 für die Laufrollen 14 am Rohr 20 sind so beabstandet, daß sie sich zwischen die inneren Schenkel 5 des U-förmigen Bügels 4 schieben lassen. Aufgrund der schrägen Anordnung dieser Schenkel 5 ist es nicht erforderlich, den Wäschesammler 12 mit großer Genauigkeit mit dem Etagenwagen 1 zusammenzubringen, da die schrägen Schenkel 5 in Verbindung mit den Stützen 21 ein Zentrieren des Etagenwagens gegenüber dem Wäschesammler 12 bewirken. Beim Zusammenschieben des Etagenwagens 1 mit dem Wäschesammler 12 fährt das Rohr 20 gegen die Anlaufschrägen 11 der Haken 6, drückt diese zunächst herunter, bis das Rohr 20 die Haken 6 vollständig überlaufen hat, wonach die Feder 10 die Haken 6 in die Kuppelstellung zurückspringen läßt, in der die Haken 6 das Rohr hintergreifen. Soll der Etagenwagen 12 wieder entkuppelt werden, werden die Haken 6 mittels des Betätigungshebels 8 nach unter bewegt und geben das Rohr 20 frei.

Anstelle von zwei im Bereich der U-förmigen Bügel 4 angeordneten Haken 6 kann auch nur ein zwischen den Schenkeln 5 angeordneter Haken vorhanden sein.

Des weiteren ist es auch möglich, nur einen, sich fast über die gesamte Breite der Rückwand 3 erstreckenden, U-förmigen Bügel 4 vorzusehen, der sich mit seinen äußeren, schräg verlaufenden Schenkeln zwischen die Pfosten 15 der Wäschesammlers 12 einführen läßt. In diesem Fall entfallen das U-förmige Rohr 20 sowie die Stützen 21 für die Laufrollen 14, das sich diese, wie die anderen befestigen lassen. Auch bei dieser Ausführungsform können ein oder zwei Haken 6 zum Kuppeln des Etagenwagens 1 mit dem Wäschesammler 12 vorgesehen sein.

Wenn der oder die U-förmigen Bügel 4 höher als das Rohr 20 bzw. die Querstrebe 18 am Etagenwagen 1 angeordnet sind, müssen die Haken 6 umgekehrt angeordnet sein, d. h. sie müssen, um mit ihrer Anlaufschräge 11 über das Rohr 20 bzw. die Querstrebe 18 laufen zu können, nach oben klappen und für die Kupplungsstellung wieder nach unten klappen. Entsprechend erfolgt das Auskuppeln durch Betätigen des Hebels 8 nach unten und nicht, wie im dargestellten Ausführungsbeispiel durch Betätigung des Hebels 8 nach oben.

## Patentansprüche

1. Transportgerät für Frischwäsche, Schmutzwäsche und ggf. Pflegemittel für Krankenhäuser und Pflegeheime aus
- einem allein verfahrbaren Etagenwagen (1), insbesondere Schrankwagen für Frischwäsche und Pflegemittel,
- einem allein verfahrbaren Wäschesammler (12) für Schmutzwäsche und
- einer lösbaren Kupplungseinrichtung am Etagenwagen (1) und am Wäschesammler (12) zum Zusammenfügen und gemeinsamen Verfahren jeweils eines Etagenwagens (1) und eines Wäschesammlers (12), **dadurch gekennzeichnet,** daß am unteren Bereich des Etagenwagens (1) wenigstens ein beabstandeter, waagerechter, U-förmiger Bügel (4) angeordnet ist, der eine waagerechte Stange (20, 18) am Wäschesammler (12) über- oder untergreift, wobei dieser Bügel (4) zum Zentrieren des Wäschesammlers (12) bezüglich des Etagenwagens (1) dient, indem die zum unteren Bereich des Etagenwagens (1) führenden Schenkel (5) des U-förmigen Bügels (4) zwischen senkrechte Rohre (15) des Wäschesammlers (12) eingreifen oder senkrechte Stützen (21) umgreifen und daß wenigstens ein klappbarer Haken (6) die waagerechte Stange (18, 20) über- oder untergreift.

2. Transportgerät nach Anspruch 1, **dadurch gekennzeichnet,** daß der U-förmige Bügel (4) als Trapez ausgebildet ist und die Schenkel (5) zum unteren Bereich des Etagenwagens (1) hin auseinanderlaufen.

3. Transportgerät nach Anspruch 1 oder 2, **dadurch gekennzeichnet,** daß zwei U-förmige Bügel (4) beabstandet zueinander am unteren Bereich des Etagenwagens (1) angeordnet sind.

4. Transportgerät nach Anspruch 3, **dadurch gekennzeichnet,** daß die zum Kuppeln dienende waagerechte Stange (20) am Wäschesammler (12) gegenüber den senkrechten Rohren (15) vorsteht und daß an der waagerechten Stange (20) zwei senkrechte Stützen (21) für Laufrollen (14) angeordnet sind, deren Abstand so bemessen ist, daß sie mit geringem Spiel zwischen die Schenkel (5) der U-förmigen Bügel (4) greifen.

5. Transportgerät nach einem der Ansprüche 1 bis 4, **dadurch gekennzeichnet,** daß der oder die Haken (6) an einer Schwenkachse (7) unterhalb des Etagenwagens (1) gelagert sind, die Schwenkachse (7) mit wenigstens einem seitlichen Betätigungshebel (8) verbunden ist und eine die Haken (6) in eine Einhakstellung bringende Feder (10) vorgesehen ist.

6. Transportgerät nach einem der Ansprüche 1 bis 5, **dadurch gekennzeichnet,** daß der oder die Haken (6) eine Anlaufschräge (11) zum Über- oder Unterlaufen des waagerechten Rohres (20) beim Einkuppeln aufweisen.
